(19) Europäisches Patentamt
European Patent Office
Office européen des brevets

(11) EP 4 748 618 A1

(12) EUROPEAN PATENT APPLICATION

(43) Date of publication:
27.05.2026 Bulletin 2026/22

(21) Application number: 24215032.4

(22) Date of filing: 25.11.2024

(51) International Patent Classification (IPC):
B60L 1/14 (2006.01)    B60L 3/12 (2006.01)
B60L 53/10 (2019.01)

(52) Cooperative Patent Classification (CPC):
B60L 53/63; B60L 1/02; B60L 1/14; B60L 3/12;
B60L 53/11; B60L 53/12; B60L 53/14;
B60L 53/305; B60L 53/57; B60L 53/62;
B60L 53/64; B60L 53/65; B60L 53/665;
B60L 53/67; B60L 53/68;                    (Cont.)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Hitachi Energy Ltd
8050 Zürich (CH)

(72) Inventors:
• GIUNTOLI, Marco
64521 Groß-Gerau (DE)
• SANTARELLI, Marina
16154 Genova (IT)

(74) Representative: Vossius & Partner
Patentanwälte Rechtsanwälte mbB
Siebertstrasse 3
81675 München (DE)

(54) CHARGING MANAGEMENT DEVICE, METHOD AND SYSTEM FOR ELECTRIC VEHICLES

(57) The present disclosure relates to a charging management device for electric vehicles comprising at least one processor configured to obtain a predetermined state of charge, SoC, of a battery of the electric vehicle, obtain a target time for reaching the predetermined SoC, determine a power consumption for reaching the predetermined SoC within the target time and assign a sequence of chargers of a plurality of chargers based on the predetermined SoC, the target time, and the determined power consumption. The present disclosure further en- compasses a corresponding method and system.

```
┌─────────────────────────────────────────────┐
│ S1 obtaining a predetermined state of charge, │
│         SoC, of a battery of an electric vehicle │
└─────────────────────────────────────────────┘
                      │
                      ▼
┌─────────────────────────────────────────────┐
│ S2 obtaining a target time for reaching the    │
│         predetermined SoC                       │
└─────────────────────────────────────────────┘
                      │
                      ▼
┌─────────────────────────────────────────────┐
│ S3 determining a power consumption for reaching │
│         the predetermined SoC within the target time │
└─────────────────────────────────────────────┘
                      │
                      ▼
┌─────────────────────────────────────────────┐
│ S4 assigning a sequence of chargers of a        │
│         plurality of chargers based on the       │
│         predetermined SoC, the target time, and the │
│         determined power consumption            │
└─────────────────────────────────────────────┘
```

FIG. 2

EP 4 748 618 A1

(52) Cooperative Patent Classification (CPC): (Cont.)
**B60L 55/00; B60L 58/12; B60L 58/16;**
**B60L 58/26; B60L 58/27; G01R 31/382;**
**G01R 31/392; G06Q 50/06; H01M 10/443;**
**H01M 10/486; H02J 7/82; H02J 7/84; H02J 50/80;**
B60L 2240/34; B60L 2240/36; B60L 2240/545;
B60L 2240/547; B60L 2240/549; B60L 2240/662;
B60L 2240/72; B60L 2240/80; B60L 2260/44;
B60L 2260/54; B60L 2260/56; H02J 2105/37

**Description**

The present disclosure relates to a charging management device, method and system for electric vehicles. The disclosure further relates to a corresponding storage medium and computer program.

The disclosure is applicable to various charging scenarios of electric vehicles (EV) such as depot modelling or fleet management.

In case vehicles of a fleet are coupled with chargers in a depot in an unmanaged manner, i.e., there is no organised routing of chargers to vehicles, problems may occur in that a desired SoC or preconditioning is not met prior to departure. A fixed assignment of vehicles to chargers as done in existing systems may lead to reduced exploitation of certain chargers and limited flexibility on vehicle routing.

The present disclosure has been made in view of the above problems and mitigates the drawbacks of existing systems.

The invention is specified by the independent claims. Preferred embodiments are defined in the dependent claims. In the following description, although numerous features may be designated as optional, it is nevertheless acknowledged that all features comprised in the independent claims are not to be read as optional.

The present disclosure relates to a charging management device for electric vehicles comprising at least one processor configured to obtain a predetermined state of charge, SoC, of a battery of the electric vehicle, obtain a target time for reaching the predetermined SoC, determine a power consumption for reaching the predetermined SoC within the target time and assign a sequence of chargers of a plurality of chargers based on the predetermined SoC, the target time, and the determined power consumption.

Various embodiments may preferably implement the following features.

Preferably, the charging management device is a charging management device for electric vehicles and/or a plurality of electric chargers. Preferably, the electric vehicles may be connected to or connectable to one of the plurality of chargers.

Preferably, the processor is further configured to determine a power consumption for cooling or warming up the battery. Preferably, the processor is further configured to determine a power consumption for preconditioning of the electric vehicle. Preferably, the processor is further configured to assign the sequence of chargers based on the determined power consumptions.

Preferably, the processor is further configured to obtain an ambient temperature, and to further determine the power consumption for battery cooling and the power consumption for preconditioning based on the obtained ambient temperature. Preferably, the device comprises at least one temperature sensor for obtaining the ambient temperature.

Preferably, the preconditioning comprises cooling and/or heating the battery and/or the interior of the electric vehicle, and/or multimedia playback, and/or interior lighting.

Preferably, the processor is further configured to obtain at least one of the following historical data: SoC, state of health, SoH, of the battery, preconditioning power consumption, cooling power consumption per vehicle or per kind of vehicle. Preferably, the total determined power consumption is determined based on the historical data. Preferably, the historical data is obtained according to the season. Preferably, the historical data is obtained from a memory and/or a database.

Preferably, the processor is further configured to obtain a maximum power available at the chargers, and/or to obtain a cost for non-achievement of the predetermined SoC within the target time. Preferably, the processor is further configured to assign the sequence of chargers based on the maximum available power and/or the cost.

Preferably, the device further comprises at least one acquisition circuit configured to acquire a current SoC, and/or a current charging power, and/or a maximum available charging power of each of the at least one charger, and/or a vehicle preconditioning state. Preferably, the processor is configured to determine the determined total power consumption based on the data acquired by the acquisition circuit.

The present disclosure further relates to a corresponding charging management method for electric vehicles comprising obtaining a predetermined state of charge, SoC, of a battery of an electric vehicle, obtaining a target time for reaching the predetermined SoC, determining a power consumption for reaching the predetermined SoC within the target time and assigning a sequence of chargers of a plurality of chargers based on the predetermined SoC, the target time, and the determined power consumption.

Various embodiments may preferably implement the following features.

Preferably, the method further comprises determining a power consumption for cooling or warming up the battery. Preferably, the method further comprises determining a power consumption for preconditioning of the electric vehicle. Preferably, the method further comprises assigning the sequence of chargers based on the determined power consumptions. Preferably, the method further comprises obtaining an ambient temperature, and further determining the power consumption for battery cooling and the power consumption for preconditioning based on the obtained ambient temperature.

Preferably, the preconditioning comprises cooling and/or heating the battery and/or the interior of the electric vehicle, and/or multimedia playback, and/or interior lighting.

Preferably, the method further comprises obtaining at least one of the following historical data: SoC, state of health, SoH, of the battery, preconditioning power consumption, cooling power consumption per vehicle or per kind of vehicle. Preferably, the total determined power consumption is determined based on the historical data. Preferably, the historical data is obtained according to the season. Preferably, the historical data is obtained from a memory and/or a database.

Preferably, the method further comprises obtaining a maximum power available at the chargers, and/or obtaining a cost for non-achievement of the predetermined SoC within the target time. Preferably, the method further comprises assigning the sequence of chargers based on the maximum available power and/or the cost. Preferably, the method further comprises determining the determined total power consumption based on at least one of a current SoC, and/or a current charging power, and/or a maximum available charging power of each of the at least one charger, and/or a vehicle preconditioning state.

The present disclosure also relates to a non-volatile storage medium comprising instructions which, when executed by a processor, configure the processor to perform the method as outlined above.

Further, the disclosure relates to a computer program product comprising instructions which, when executed by a processor, configure the processor to perform the method as described above.

The present disclosure also relates to a charging management system for electric vehicles comprising a plurality of chargers and the device as described above.

Other aspects, features, and advantages will be apparent from the summary above, as well as from the description that follows, including the figures and the claims.

Embodiments of the present disclosure will now be described by way of example only and with reference to the following accompanying drawings. In the figures, the same reference numerals denote the same or similar elements.

FIG. 1 shows a schematic diagram of a device according to an embodiment of the present disclosure.

FIG. 2 shows a flow chart according to an embodiment of the present disclosure.

FIGS. 3 to 5 show routing of vehicles and chargers according to embodiments of the present disclosure.

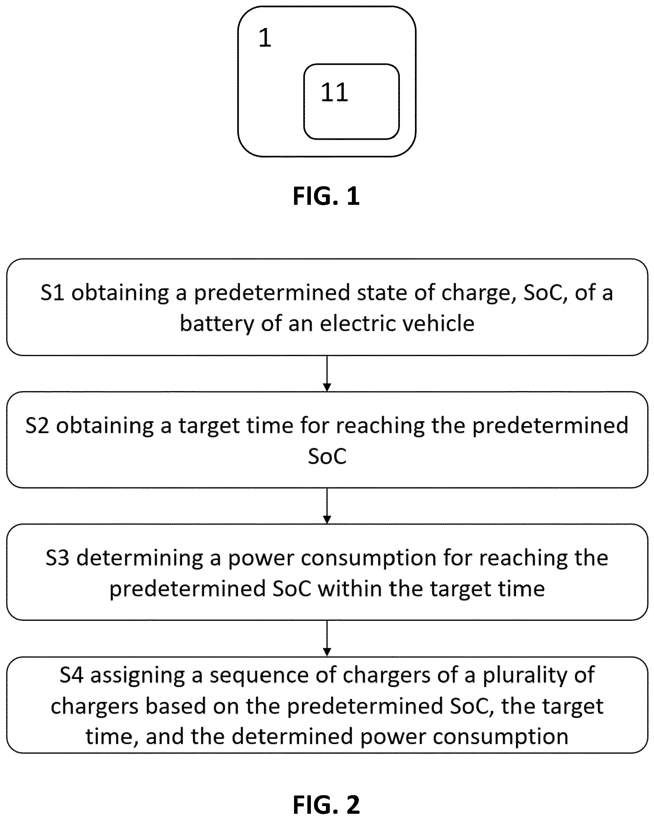

As shown in FIG. 1, the present disclosure relates to a charging management device 1 for electric vehicles comprising at least one processor 11 configured to obtain a predetermined state of charge (SoC) of a battery of the electric vehicle, obtain a target time for reaching the predetermined SoC, determine a power consumption for reaching the predetermined SoC within the target time and assign a sequence of chargers of a plurality of chargers based on the predetermined SoC, the target time, and the determined power consumption.

Assigning a sequence of chargers may comprise generating at least one control signal, e.g., by the processor 11. Said control signal may be transmitted to the plurality of chargers and/or the electric vehicle(s). The control signal may carry information on the assignment of charger and vehicle.

Assigning a sequence may include at least one of a location of the charger(s), a location of the vehicle, a time of arrival of the vehicle, a time of departure of the vehicle, a duration of stay and/or charging of the vehicle at the charger(s), an initial SoC, a target SoC, SoH, or the like.

As used herein, the term SoC relates to the energy remaining in the battery pack. The SoC may be determined using a chemical method, voltage-based method, current integration, Kalman filtering, pressure or a combination thereof. As regards further details of the determination of the SoC, reference is made to respective publications.

The determination of the power consumption may for example be an estimation, approximation, calculation, or taken from previous charging/preconditioning cycles.

The charging management device 1 may be a charging management device 1 for electric vehicles and/or a plurality of electric chargers.

The electric vehicle may be connected to or connectable to the electric charger. Moreover, the device 1 may be connected to or connectable to the electric charger. The connection of the device 1 to the electric charger may be wired or wireless. The device 1 may also be integrated to or form part of the electric charger.

The processor 11 may be further configured to determine a power consumption for cooling or warming up the battery. Further, the processor 11 may be configured to determine a power consumption for preconditioning of the electric vehicle. The processor 11 may also be configured to assign the sequence of chargers based on the determined power consumptions.

The processor 11 may be further configured to obtain an ambient temperature, and to further determine the power consumption for battery cooling and the power consumption for preconditioning based on the obtained ambient temperature. The device 1 may comprise at least one temperature sensor for obtaining the ambient temperature.

The preconditioning may comprise cooling and/or heating the battery and/or the interior of the electric vehicle, and/or multimedia playback, and/or interior lighting.

The processor 11 may be further configured to obtain at least one of the following historical data: SoC, state of health, SoH, of the battery, preconditioning power consumption, cooling power consumption per vehicle or per kind of vehicle. The total determined power consumption may be determined based on the historical data. The historical data may be obtained according to the season. The historical data may be obtained from a memory and/or a database.

SoH generally refers to the condition of the battery compared to its ideal or initial condition. Normally, SoH is indicated in percent, with 100% being an ideal battery condition. For SoH determination, any of the following parameters (alone or in combination) may be considered to derive an SoH value: Internal resistance / impedance / conductance, capacity, voltage, self-discharge, ability to accept a charge, number of charge-discharge cycles, age of the battery, temperature of battery during its previous uses, total energy charged and discharged.

The processor 11 may further be configured to obtain a maximum power available at the chargers, and/or to obtain a cost for non-achievement of the predetermined SoC within the target time. The processor 11 may be further configured to assign the sequence of chargers based on the maximum available power and/or the cost.

In an embodiment, the device 1 further comprises at least one acquisition circuit configured to acquire a current SoC, and/or a current charging power, and/or a maximum available charging power of each of the at least one charger, and/or a vehicle preconditioning state.

The acquisition circuit(s) may comprise at least one sensor for obtaining at least one of current/voltage/capacity/resistance or other electrical values. Moreover, the acquisition circuit(s) may be configured to communicate with the vehicle, e.g., wireless, wired, via an interface, to acquire vehicle status information. The vehicle status information may comprise one or more of SoC, SoH, temperature, vehicle data. Further, the acquisition circuit(s) may be configured to obtain supply power information from a grid, an electric charger, a battery or the like. The information acquired by the acquisition circuit(s) may comprise, e.g., one or more of information on a maximum charging power/output power of an electric charger, a time schedule of an electric charger/electric vehicle, a maximum charging power of a battery, or the like. The functionality of the acquisition circuit(s) may fully or partially be performed by the at least one processor 11.

The processor 11 may be configured to determine the determined total power consumption based on the data acquired by the acquisition circuit.

With reference to FIG. 2, the present disclosure further relates to a corresponding charging management method for electric vehicles comprising obtaining S1 a predetermined state of charge (SoC) of a battery of an electric vehicle, obtaining S2 a target time for reaching the predetermined SoC, determining S3 a power consumption for reaching the predetermined SoC within the target time and assigning S4 a sequence of chargers of a plurality of chargers based on the predetermined SoC, the target time, and the determined power consumption.

In an embodiment, the method further comprises determining a power consumption for cooling or warming up the battery. The method may further comprise determining a power consumption for preconditioning of the electric vehicle. The method may further comprise assigning the sequence of chargers based on the determined power consumptions. The method may also comprise obtaining an ambient temperature, and further determining the power consumption for battery cooling and the power consumption for preconditioning based on the obtained ambient temperature.

In an embodiment, the preconditioning comprises cooling and/or heating the battery and/or the interior of the electric vehicle, and/or multimedia playback, and/or interior lighting.

In an embodiment, the method further comprises obtaining at least one of the following historical data: SoC, state of health, SoH, of the battery, preconditioning power consumption, cooling power consumption per vehicle or per kind of vehicle. The total determined power consumption may be determined based on the historical data. The historical data may be obtained according to the season. The historical data may be obtained from a memory and/or a database.

The method may further comprise obtaining a maximum power available at the chargers, and/or obtaining a cost for non-achievement of the predetermined SoC within the target time. The method may further comprise assigning the sequence of chargers based on the maximum available power and/or the cost. Also, the method may comprise determining the determined total power consumption based on at least one of a current SoC, and/or a current charging power, and/or a maximum available charging power of each of the at least one charger, and/or a vehicle preconditioning state.

The present disclosure also relates to a non-volatile storage medium comprising instructions which, when executed by a processor, configure the processor to perform the method as outlined above.

Further, the disclosure relates to a computer program product comprising instructions which, when executed by a processor, configure the processor to perform the method as described above.

The present disclosure also relates to a charging management system for electric vehicles comprising a plurality of chargers and the device 1 as described above. The system may also comprise at least one acquisition circuit and/or at least one sensor.

In the following, the above-described device, method and system will be described in more detail. In particular, the vehicle to charger routing can be illustrated using the following parameters and equations.

$R_{v_i,v_j} \in \{0,1\}$ indicates a forecasted overlapping vehicle parameter, i.e. $R_{v_i,v_j} = 1$ means that $i\text{-}th$ and $j\text{-}th$ vehicles

have, at least, one time step where both are available inside the depot. The parameter set is defined by $|V|x|V|$ where $V$ is the set of vehicles. $P_{v,nom} \in \mathbb{R}^+$ is a nominal allowed vehicle power, i.e., a maximum allowed charging power from the vehicle perspective in *kW*, $|V|x1$ where $V$ is the set of vehicles.

$\delta_{v,c} \in \{0,1\}$ describes which vehicle is connected to which charger. If $\delta_{v,c} = 1$ means that vehicle *v - th* is connected to the charger *c - th,* otherwise 0. Considering all possible combinations, the set of variables is $|Vx|C|$.

Binary and continuous variables will impose a Mixed Integer Linear Programming (MILP) problem to be solved. Constraints (1)-(3) describe the logical and physical relationship between vehicles and chargers.

$$\sum_{c=1}^{C} \delta_{v,c} \leq 1, \quad \forall v \in V \tag{1}$$

$$\sum_{i=1}^{V} \sum_{j=i+1}^{V} R_{i,j} \cdot \left(\delta_{i,c} + \delta_{j,c}\right) \leq 1, \quad \forall c \in C \tag{2}$$

$$Pch_{v,t} \leq \sum_{c=1}^{C} U_{v,t} \cdot \delta_{v,c} \cdot \min\left(P_{c,nom}, P_{v,nom}\right), \quad \forall v \in V, \forall t \in T \tag{3}$$

Therein, the constraint (1) describes that each vehicle cannot be assigned to more than one charger. Exceptions to this constraint could be applied in the case of a specific hardware setup, e.g., a vehicle that accepts parallel charger configuration. Further hardware limitations could be applied similarly, e.g., a specific vehicle cannot be connected to one specific charger. For all the corner cases, this constraint needs to be augmented with dedicated auxiliary ones.

The inequality constraint (2) excludes combinations where both vehicles are available inside the depot simultaneously. The same considerations could be made in case of exceptions.

The inequality constraint (3) allows the charging power to be different from zero. Minimum power capability between charger and vehicle will be considered.

The inequality constraint (2) allows to disregard non-applicable routing due to simultaneous vehicle availability. In particular, the constraint solves the problem in a compact way, i.e., keeps the problem size (in terms or number of variables) as small as possible. However, this formulation does not allow for modifying charger during the charging phase: the vehicle is assigned to a single charger that cannot be rescheduled to another vehicle for the entire availability time. This assumption leads to solution unfeasibility as soon as the number of simultaneous vehicles exceeds the number of chargers. To overpass this condition, a broad but compact model is shown below with the following variables.

$\beta_{v,c,t} \in \{0,1\}$ describes vehicle is connected to which charger for each time step. If $\beta_{v,c,t} = 1$ means that vehicle *v - th* is plugged to the charger *c - th* at *t - th* time, otherwise 0. Considering all possible combinations, the set of variables is $|V|x |C|x|T|$.

$\gamma_{v,t} \in \{0,1\}$ describes the transition between unplugged to plugged to a charger for each time step. If $\gamma_{v,t} = 1$ means that vehicle *v - th* is being connected at *t - th* time. Considering all possible combinations, the variable's set is $|V|x|T|$.

Binary and continuous variables will impose a MILP problem to be solved. Following the same approach as above, the following set of constraints describes the extended formulation.

$$\sum_{c=1}^{C} \beta_{v,c,t} \leq U_{v,t}, \quad \forall v \in V, \forall t \in T \tag{4}$$

$$\sum_{v=1}^{V} \beta_{v,c,t} \leq 1, \quad \forall c \in C, \forall t \in T \tag{5}$$

$$\gamma_{v,t} \geq \beta_{v,c,t} - \beta_{v,c,t-1}, \quad \forall v \in V, \forall c \in C, \forall t \in T\backslash\{1\} \tag{6}$$

$$\sum_{t=1}^{T} \gamma_{v,t} \leq 1, \quad \forall v \in V \qquad (7)$$

$$Pch_{v,t} \leq \sum_{c=1}^{C} \beta_{v,c,t} \cdot \min(P_{c,nom}, P_{v,nom}), \quad \forall v \in V, \forall t \in T \qquad (8)$$

The constraint (4) ensures that the vehicle cannot be plugged if it is not inside the depot. The same consideration can be applied from (1).

Inequality constraint (5) ensures that each charger can supply one single vehicle at time. Proper limits can be considered and amended if the charger can supply more than one vehicle.

Inequality constraint (6) forces $\gamma_{v,t}$ to be one when the vehicle is being plugged to the charger in order to be charged.

Inequality constraint (7) sets the maximum number of recharging phases (i.e., from unplugged to plugged) equal to one. Even in this case, corner cases can be managed by relaxing this constraint. However, this constraint is used to avoid a bouncing effect (i.e., multiple unused connection and disconnection).

The constraint (8) allows charging power once the vehicle is plugged in.

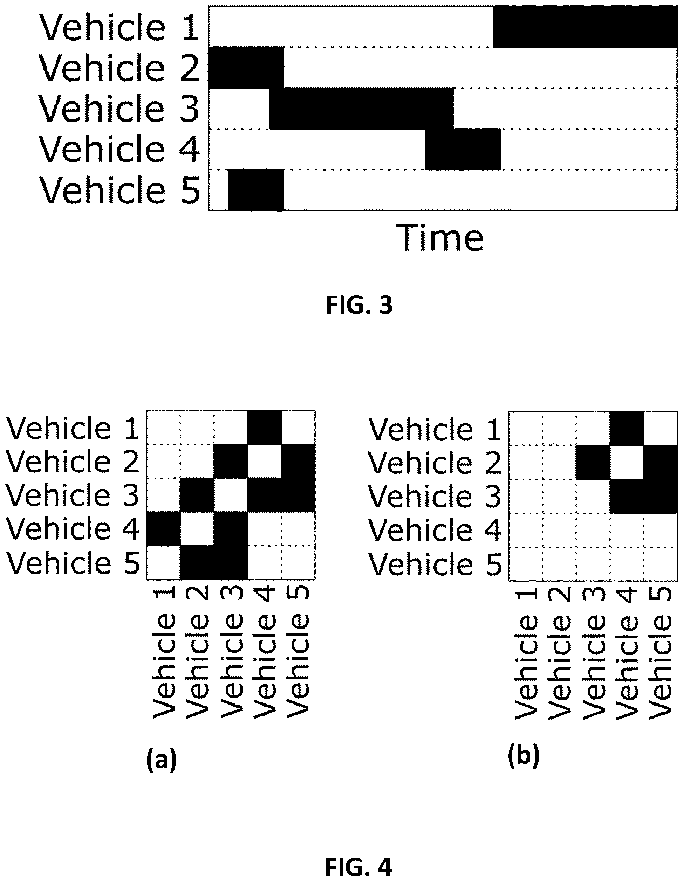

The above, in particular the vehicle to charger routing, will be further described with reference to FIGS. 3 to 5.

FIG. 3 shows exemplary vehicle availabilities of five vehicles (Vehicle 1-5, y-axis) over time (x-axis), wherein the dark blocks indicate availability. This scheduled availability creates the matrix shown in FIG. 4(a) which indicates which vehicles are simultaneously available for charging and can thus not be charged using the same charger (dark blocks). The matrix corresponds to the above *R* parameter, wherein *R* is a symmetrical matrix. For simplification, in FIG. 4(b) only the upper triangle is shown (i.e., the double mapping is omitted).

In an example, two fast chargers and one slow charger may be provided with a capability of 100 kW and 20 kW, respectively. For simplicity, vehicles may charge 65 kW for charging and 130 kWh to be fully charged at the end of the charging period. The vehicle energy and charging constraints are considered to complete the explanatory case, while the objective function is set to minimise the square of charging power patterns (e.g., by Mixed Integer Quadratic Programming, MIQP, but the disclosure is not limited thereto). The numerical values given above are purely exemplary and not to be viewed as limiting.

Table 1 shows numerical results, where vehicles to chargers coupling are indicated by ones. Following the objective function, the slow charger has been assigned to Vehicle 1 and 3, those with the longer charging time. Vehicles 2, 4 and 5 are divided over the fast chargers, driven by their availability.

Table 1

|  | Charger 1 (fast) | Charger 2 (fast) | Charger 3 (slow) |
|---|---|---|---|
| Vehicle 1 |  |  | 1 |
| Vehicle 2 |  | 1 |  |
| Vehicle 3 |  |  | 1 |
| Vehicle 4 |  | 1 |  |
| Vehicle 5 | 1 |  |  |

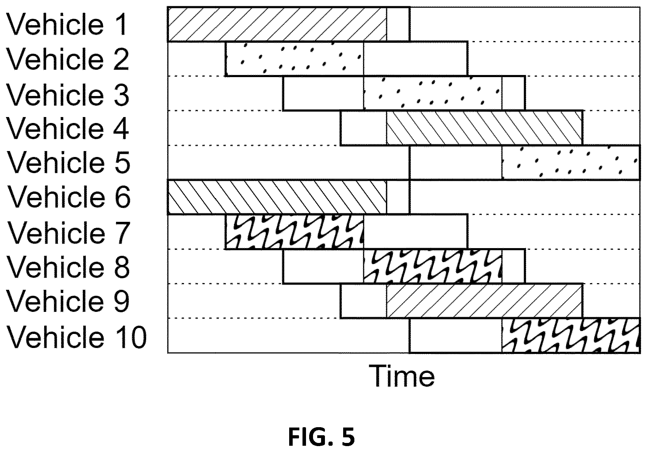

FIG. 5 is a further depiction of vehicle to charger routing according to an embodiment of the present disclosure. In this example, there are ten vehicles (with the same properties) and four chargers, two fast and two slow chargers with the same capabilities of the previous example. The ten vehicles are almost simultaneously available in the depot. FIG. 4 indicates the availability of the vehicles (Vehicle 1-10, y-axis) over time (x-axis), wherein the rectangular blocks indicate each vehicle and the hatched/dotted blocks each indicate a charger and its respective routing to a vehicle.

For example, a first charger (hatched ///) first charges vehicle 1 almost during the entire stay of the vehicle and then proceeds with charging vehicle 9. A second charger (dotted) first charges vehicle 2, then vehicle 3 and subsequently vehicle 5.

FIG. 5 therefore illustrates how the charging phases are executed sequentially between different vehicles and different chargers.

The present disclosure therefore provides an optimised vehicle to charger routing and thus allows to more efficiently use the available charging power. For fleet management, this further ensures that each vehicle is charged to a desired SoC and/or preconditioned as required prior to dispatch/departure.

In vehicle depots, generally a charger is correlated to a defined parking slot. If the depot has manoeuvre or space limitations, a particular sequence of vehicle in/vehicle out must be defined to avoid an infeasible solution (i.e., the departure time is not ordered with the vehicle stack inside the depot). The depot footprint and the internal organisation (e.g., input/output vehicle order, charging sequence) can be translated into a set of Boolean constraints that reduce the feasibility space of the solution. The present disclosure improves the utilisation of the present infrastructure for depot applications.

Moreover, the present disclosure can be used for considering series-parallel chargers (i.e., chargers that can improve their capability by changing the electrical output configuration) or internal depot microgrid reconfiguration to meet the charging requirements and use as much as possible of the charger infrastructure.

Also, vehicle-to-grid (V2G) and vehicle-to-vehicle (V2V) features may be incorporated, where, for example, depot vehicles are recharging themselves without importing energy from the local distribution network (e.g., transferring energy from one vehicle to another).

For dynamic maintenance, a brief unavailability of one or more chargers can be considered in the mathematical model. That is, a dedicated time slot for charger or vehicle maintenance or auxiliary depot tasks (e.g., cleaning) can be taken into account in the above method.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any one of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any one of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any one of the various illustrative logical blocks, units, processors, means, circuits, methods and functions described in connection with the aspects disclosed herein can be implemented by electronic hardware (e.g., a digital implementation, an analogue implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "unit" as used herein, refers to software, firmware, hardware, and any combination of these elements for performing the associated functions described herein. Additionally, for purpose of discussion, the various units are described as discrete units; however, as would be apparent to one of ordinary skill in the art, two or more units may be combined to form a single unit that performs the associated functions according embodiments of the present disclosure.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organisation.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

## Claims

1. Charging management device for electric vehicles comprising at least one processor configured to:

   obtain a predetermined state of charge, SoC, of a battery of the electric vehicle;
   obtain a target time for reaching the predetermined SoC;
   determine a power consumption for reaching the predetermined SoC within the target time; and
   assign a sequence of chargers of a plurality of chargers based on the predetermined SoC, the target time, and the determined power consumption.

2. Charging management device according claim 1, wherein the processor is further configured to:

   determine a power consumption for cooling or warming up the battery;
   determine a power consumption for preconditioning of the electric vehicle; and
   assign the sequence of chargers based on the determined power consumptions.

3. Charging management device according to claim 2, wherein the processor is further configured to obtain an ambient temperature, and to further determine the power consumption for battery cooling and the power consumption for preconditioning based on the obtained ambient temperature;
   wherein preferably, the device comprises at least one temperature sensor for obtaining the ambient temperature.

4. Charging management device according to any one of claims 2 or 3, wherein the preconditioning comprises cooling and/or heating the battery and/or the interior of the electric vehicle, and/or multimedia playback, and/or interior lighting.

5. Charging management device according to any one of claims 1 to 4, wherein the processor is further configured to obtain at least one of the following historical data: SoC, state of health, SoH, of the battery, preconditioning power consumption, cooling power consumption per vehicle or per kind of vehicle;

wherein the total determined power consumption is determined based on the historical data;
wherein preferably, the historical data is obtained according to the season; and/or
wherein preferably, the historical data is obtained from a memory and/or a database.

6. Charging management device according to any one of claims 1 to 5, wherein the processor is further configured to obtain a maximum power available at the chargers, and/or to obtain a cost for non-achievement of the predetermined SoC within the target time; and
assign the sequence of chargers based on the maximum available power and/or the cost.

7. Charging management device according to any one of claims 1 to 6, further comprising at least one acquisition circuit configured to acquire a current SoC, and/or a current charging power, and/or a maximum available charging power of each of the at least one charger, and/or a vehicle preconditioning state;
wherein the processor is configured to determine the determined total power consumption based on the data acquired by the acquisition circuit.

8. Charging management method for electric vehicles comprising:

obtaining a predetermined state of charge, SoC, of a battery of an electric vehicle;
obtaining a target time for reaching the predetermined SoC;
determining a power consumption for reaching the predetermined SoC within the target time; and
assigning a sequence of chargers of a plurality of chargers based on the predetermined SoC, the target time, and the determined power consumption.

9. Charging management method according to claim 8, further comprising:

determining a power consumption for cooling or warming up the battery;
determining a power consumption for preconditioning of the electric vehicle; and
assigning the sequence of chargers based on the determined power consumptions; and/or
further comprising obtaining an ambient temperature, and further determining the power consumption for battery cooling and the power consumption for preconditioning based on the obtained ambient temperature.

10. Charging management method according to claim 9, wherein the preconditioning comprises cooling and/or heating the battery and/or the interior of the electric vehicle, and/or multimedia playback, and/or interior lighting.

11. Charging management method according to any one of claims 8 to 10, further comprising obtaining at least one of the following historical data: SoC, state of health, SoH, of the battery, preconditioning power consumption, cooling power consumption per vehicle or per kind of vehicle;

wherein the total determined power consumption is determined based on the historical data;
wherein preferably, the historical data is obtained according to the season; and/or
wherein preferably, the historical data is obtained from a memory and/or a database.

12. Charging management method according to any one of claims 8 to 11, further comprising obtaining a maximum power available at the chargers, and/or obtaining a cost for non-achievement of the predetermined SoC within the target time; and

assigning the sequence of chargers based on the maximum available power and/or the cost; and or
further comprising determining the determined total power consumption based on at least one of a current SoC, and/or a current charging power, and/or a maximum available charging power of each of the at least one charger, and/or a vehicle preconditioning state.

13. Non-volatile storage medium comprising instructions which, when executed by a processor, configure the processor to perform the method according to any one of claims 8 to 12.

14. Computer program product comprising instructions which, when executed by a processor, configure the processor to perform the method according to any one of claims 8 to 12.

15. Charging management system for electric vehicles comprising a plurality of chargers; and

the device according to any one of claims 1 to 7.

1

11

**FIG. 1**

S1 obtaining a predetermined state of charge, SoC, of a battery of an electric vehicle

S2 obtaining a target time for reaching the predetermined SoC

S3 determining a power consumption for reaching the predetermined SoC within the target time

S4 assigning a sequence of chargers of a plurality of chargers based on the predetermined SoC, the target time, and the determined power consumption

**FIG. 2**

**FIG. 3**

(a)

(b)

**FIG. 4**

Vehicle 1
Vehicle 2
Vehicle 3
Vehicle 4
Vehicle 5
Vehicle 6
Vehicle 7
Vehicle 8
Vehicle 9
Vehicle 10

Time

**FIG. 5**

| | Europäisches Patentamt / European Patent Office / Office européen des brevets | **EUROPEAN SEARCH REPORT** | **Application Number** EP 24 21 5032 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 372 642 A1 (HITACHI ENERGY LTD [CH]) 22 May 2024 (2024-05-22) * paragraphs 0002, 0004, 0006, 0015, 0025, 0067-0072, 0076, 0080, 0089, 0101, 0104-0106 and 0112; figures 1,5 * | 1-15 | INV. B60L1/14 B60L3/12 B60L53/10 B60L53/12 B60L53/14 B60L53/30 |
| | ----- | | B60L53/62 |
| X | US 2024/375537 A1 (ZARRILLI DONATO [DE] ET AL) 14 November 2024 (2024-11-14) | 1-4, 6-10, 12-15 | B60L53/63 B60L53/66 |
| A | * paragraphs 0011-0031, 0079, 0080, 0091, 0092, 0119, 0127, 0131, 0216 and 0222; figure 1 * | 5,11 | B60L53/67 B60L53/68 B60L58/12 B60L58/16 |
| | ----- | | B60L58/24 |
| X | US 2023/099547 A1 (MANDEL-SENFT ADAM J [US] ET AL) 30 March 2023 (2023-03-30) | 1-3,6-9, 12-15 | B60L58/26 |
| A | * paragraphs [0002], [0005] - [0007], [0017], [0022], [0026], [0027]; figure 2 * | 4,5,10, 11 | B60L58/27 G06Q50/06 |
| | ----- | | |

**TECHNICAL FIELDS SEARCHED (IPC)**

B60L
G06Q
H02J
G01R

The present search report has been drawn up for all claims

| Place of search | Date of completion of the search | Examiner |
|---|---|---|
| The Hague | 21 May 2025 | Akbudak, Tarik |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...................................................................

& : member of the same patent family, corresponding document

page 1 of 2

Europäisches
Patentamt

European
Patent Office

Office européen
des brevets

# EUROPEAN SEARCH REPORT

**Application Number**

EP 24 21 5032

## DOCUMENTS CONSIDERED TO BE RELEVANT

| Category | Citation of document with indication, where appropriate, of relevant passages | Relevant to claim | CLASSIFICATION OF THE APPLICATION   (IPC) |
|---|---|---|---|
| | | | H02J7/00<br>B60L53/65<br>B60L53/57<br>B60L55/00<br>G01R31/382<br>G01R31/392 |
| | | | **TECHNICAL FIELDS SEARCHED       (IPC)** |

The present search report has been drawn up for all claims

| Place of search | Date of completion of the search | Examiner |
|---|---|---|
| The Hague | 21 May 2025 | Akbudak, Tarik |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 21 5032

This annex lists the patent family members relating to the patent documents cited in the above-mentioned European search report.
The members are as contained in the European Patent Office EDP file on
The European Patent Office is in no way liable for these particulars which are merely given for the purpose of information.

21-05-2025

| Patent document cited in search report | | Publication date | Patent family member(s) | | Publication date |
|---|---|---|---|---|---|
| EP 4372642 | A1 | 22-05-2024 | NONE | | |
| US 2024375537 | A1 | 14-11-2024 | AU | 2021460192 A1 | 29-02-2024 |
| | | | CA | 3227764 A1 | 16-02-2023 |
| | | | CN | 117794776 A | 29-03-2024 |
| | | | EP | 4384412 A1 | 19-06-2024 |
| | | | JP | 2024530679 A | 23-08-2024 |
| | | | US | 2024375537 A1 | 14-11-2024 |
| | | | WO | 2023016655 A1 | 16-02-2023 |
| US 2023099547 | A1 | 30-03-2023 | CN | 115882519 A | 31-03-2023 |
| | | | US | 2023099547 A1 | 30-03-2023 |

EPO FORM P0459

For more details about this annex : see Official Journal of the European Patent Office, No. 12/82